Europäisches Patentamt

(19) European Patent Office

Office européen des brevets

(11) EP 1 273 899 A2

(12) ## DEMANDE DE BREVET EUROPEEN

(43) Date de publication:
**08.01.2003 Bulletin 2003/02**

(51) Int Cl.$^7$: **G01M 13/02**

(21) Numéro de dépôt: **02291681.1**

(22) Date de dépôt: **05.07.2002**

(84) Etats contractants désignés:
**AT BE BG CH CY CZ DE DK EE ES FI FR GB GR IE IT LI LU MC NL PT SE SK TR**
Etats d'extension désignés:
**AL LT LV MK RO SI**

(30) Priorité: **06.07.2001 FR 0109018**

(71) Demandeur: **Renault s.a.s.**
**92100 Boulogne Billancourt (FR)**

(72) Inventeurs:
- **Abida, Jamil**
  **78280 Guyancourt (FR)**
- **Rascle, Thierry**
  **78210 Saint-Cyr-L'Ecole (FR)**
- **Cadalen, Jean-Paul**
  **95210 Saint-Gratien (FR)**

(54) **Procédé d'évaluation de la durée de vie restante d'une courroie de transmission, et son dispositif de mise en oeuvre**

(57) L'invention concerne un procédé d'évaluation de la durée de vie restante d'une courroie de transmission, entraînée par au moins une poulie en rotation sous l'action d'un moteur dont on connaît le régime et la charge, tel qu'il comporte une phase d'estimation du vieillissement de la courroie qui consiste à incrémenter, avec un pas de temps fixe ($\Delta t$), une ou plusieurs variables d'endommagement ($D_i$) relatives aux différents modes de défaillance de la courroie et tel que la valeur des incréments d'endommagement ($\delta D_i$) est calculée en fonction des paramètres caractérisant le point de fonctionnement du moteur, soit son régime (N) et sa charge (C), et la température de fonctionnement ($\theta$) de la courroie, et tel qu'il comporte ensuite une phase d'évaluation de la durée de vie restante de la courroie à partir de valeurs maximales ($S_i$) prédéterminées pour chaque variable ($D_i$) d'endommagement.

Application aux courroies de distribution pour véhicules automobile.

FIG_4

EP 1 273 899 A2

**Description**

La présente invention concerne un procédé d'évaluation de la durée de vie restante d'une courroie de transmission en général, et plus particulièrement d'une courroie de distribution dans un moteur de véhicule, à partir de l'estimation de son vieillissement. Elle concerne également un dispositif de mise en oeuvre d'un tel procédé.

Dans le cadre de la mise en place d'un service d'entretien personnalisé aux acheteurs d'automobiles, il serait intéressant d'établir un modèle de vieillissement pour les courroies de distribution des moteurs, qui permette d'élaborer un procédé de calcul de la durée de vie restante avant le remplacement nécessaire de la courroie. La courroie serait ainsi remplacée au moment optimal, compte tenu de l'usage qui en est fait, et non selon des indications de kilométrage et de durée, fixées au préalable.

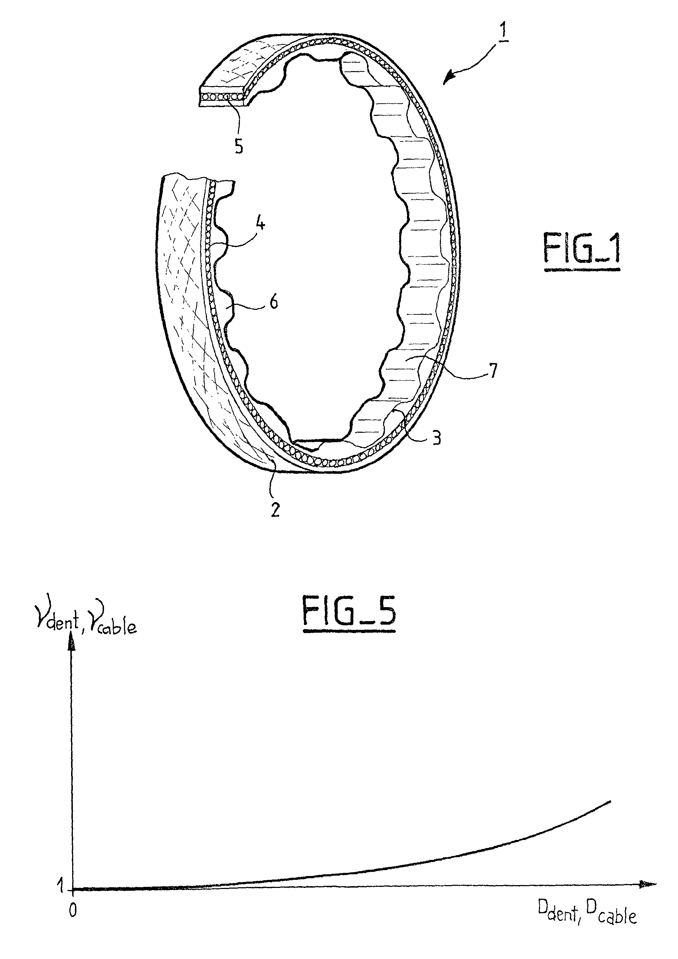

Le vieillissement d'une courroie a deux origines, l'une est mécanique et la seconde est thermique. Comme le montre la vue partielle en coupe de la figure 1, une courroie 1 est réalisée à partir d'un ruban fermé d'élastomère, rigidifié par une armature 4 en fibres de verre 5. Le ruban en élastomère se trouve ainsi partagé en deux couches. Une première couche 2, appelée dos, est plate et la seconde couche 3, qui est en contact avec des poulies d'entraînement, est plate ou crantée avec des dents 6, et recouverte d'un tissu en polyamide 7. Les nouveaux matériaux choisis peuvent être utilisés dans des plages de température plus larges et résistent à l'oxygène, à l'ozone et aux huiles.

Premièrement, une courroie de transmission a pour but de transmettre une puissance mécanique d'un arbre vers un ou plusieurs autres arbres. Cette transmission de puissance induit une usure de la courroie, par glissement sur les poulies dans le cas des courroies plates, ou une fatigue due aux efforts cycliques sur les dents dans le cas des courroies crantées. De plus, les mouvements de flexion et de contre-flexion réalisés par la courroie en s'enroulant autour des poulies du système d'entraînement fatiguent également l'armature de la courroie.

Dans le cas particulier d'une courroie de distribution d'un moteur à combustion interne dans un véhicule automobile, elle a la charge d'entraîner les arbres à cames ainsi que d'autres organes, éventuellement, tels que la pompe d'injection. Les efforts cycliques transmis alors par la courroie provoquent une fatigue et une usure des dents en élastomère. A cela s'ajoutent les mouvements de flexion et de contre-flexion réalisés par la courroie en s'enroulant autour des poulies de vilebrequin, d'arbre à cames ou de tendeurs par exemple, qui provoquent une fatigue et une usure de l'armature, ou câblé, réalisée en fibres de verre.

Deuxièmement, une température élevée provoque un vieillissement de l'élastomère constituant la courroie. Dans le cas particulier d'une courroie de distribution d'un moteur à combustion interne, la température de la courroie peut atteindre 100°C d'une part à cause de la chaleur dégagée par le moteur en brûlant le carburant, et d'autre part à cause de la chaleur qu'elle génère elle-même par les mouvements de flexion et de contre-flexion lors de son enroulement autour des différentes poulies. L'élastomère de la courroie subit une dégradation thermique de certaines de ses propriétés thermiques, notamment une augmentation de la dureté et de la raideur.

Les procédés actuels de surveillance de l'état d'une courroie de distribution s'attachent essentiellement à la détection des défaillances.

Un premier procédé consiste à surveiller un échantillon d'élastomère, de qualité identique à celui de la courroie, et placé dans le compartiment de la courroie de distribution afin d'être dans le même environnement thermique que celle-ci pour subir les mêmes conditions de vieillissement. Une telle solution est décrite dans le brevet japonais JP 60 050 232, déposé au nom de NISSAN. L'inconvénient de cette solution tient au fait que ce témoin ne subit aucune des contraintes mécaniques ni aucun échauffement supplémentaire dû aux mouvements de flexion et contre-flexion que subit la courroie, de sorte qu'il vieillit en réalité moins vite que la courroie elle-même.

Un autre procédé consiste à surveiller le synchronisme entre les mouvements du vilebrequin et ceux des arbres à cames, qui sont équipés de capteurs supplémentaires de position angulaire. Un signal d'alerte est émis lorsque la qualité du synchronisme se dégrade à la suite d'un saut de dent ou de l'allongement excessif de la courroie, comme cela est décrit dans le brevet américain US 5 389 846, déposé au nom de CHRYSLER. L'inconvénient de cette solution réside dans son coût et dans le fait que les défaillances détectées doivent être précédées d'une dégradation de la qualité du synchronisme.

Une autre solution consiste à surveiller l'acyclisme du mouvement de l'arbre à cames, qui est alors équipé d'un capteur de position angulaire. L'acyclisme est calculé à partir de l'amplitude des oscillations de la vitesse de rotation de l'arbre à cames autour de la vitesse moyenne, et un signal d'alerte est émis lorsqu'il dépasse une certaine valeur. Cette solution, décrite en particulier dans le brevet japonais JP 62 180 157, déposé au nom de TOYOTA, est coûteuse et ne prévient que les défaillances précédées d'une augmentation de l'acyclisme.

Dans le cas d'un tendeur automatique de la courroie de distribution, une solution consiste à placer un circuit électrique sur lequel le tendeur va agir comme un interrupteur quand le déplacement sera trop grand par usure de la courroie, comme le décrit par exemple le brevet coréen KR 97 021 843 au nom de HYUNDAI. De même, on peut insérer un ou plusieurs conducteurs électriques dans la courroie, avec des contacteurs pour fermer le circuit électrique. En cas de rupture du câblé ou d'usure des dents de la courroie, la résistance du circuit électrique est modifiée, comme le décrit le brevet coréen KR 97 016 234 au nom de DAEWOO. En plus du surcoût, de tels systèmes ont pour inconvénient d'alerter trop tard le conducteur pour éviter d'importants dégâts au moteur.

D'autres solutions proposent la surveillance de la température de la courroie de distribution ou de son environnement, ce qui est insuffisant pour déterminer convenablement l'état de la courroie et sa durée de vie restante si on néglige les efforts transmis.

Enfin, d'autres brevets, tels que le brevet coréen KR 97 046 202 au nom de HYUNDAI, proposent la surveillance de l'usure de la courroie par au moins un capteur optique qui détecte l'apparition d'un matériau fluorescent inséré dans la courroie, par exemple dans le cas de la disparition d'une dent. Une telle solution est coûteuse et ne prévient pas de tous les types de défaillances.

Contrairement aux solutions précédemment décrites, qui permettent seulement la détection d'anomalies particulières, comme l'arrachement d'une dent, la rupture du câblé, l'allongement excessif et l'usure du matériau pour délivrer une information sur l'état de la courroie, le procédé selon l'invention a pour but de prévenir tous les modes de défaillance connus de la courroie.

Pour cela, un premier objet de l'invention est un procédé d'évaluation de la durée de vie restante d'une courroie de transmission, entraînée par au moins une poulie en rotation sous l'action d'un moteur dont on connaît le régime et la charge, caractérisé en ce qu'il comporte une phase d'estimation du vieillissement de la courroie qui consiste à incrémenter, avec un pas de temps fixe, une ou plusieurs variables d'endommagement relatives aux différents modes de défaillance de la courroie et en ce que la valeur des incréments d'endommagement est calculée en fonction des paramètres caractérisant le point de fonctionnement du moteur, soit son régime et sa charge, et la température de fonctionnement de la courroie, et en ce qu'il comporte ensuite une phase d'évaluation de la durée de vie restante de la courroie à partir de valeurs maximales prédéterminées pour chaque variable d'endommagement.

Selon une autre caractéristique du procédé d'évaluation, la valeur de l'incrément de chaque variable d'endommagement de la courroie est pondérée par un facteur de vieillissement, qui est une fonction croissante de ladite variable d'endommagement pour tenir compte de l'évolution temporelle de certaines des propriétés physiques de l'élastomère sous l'effet de l'endommagement, comme l'augmentation de la dureté et de la raideur.

Un autre objet de l'invention est un dispositif de mise en oeuvre du procédé d'évaluation de la durée de vie restante d'une courroie de transmission qui comporte :

- une unité de calcul électronique recevant en entrée le régime et la charge du moteur d'entraînement de la courroie et des informations pour calculer la durée d'utilisation de la courroie depuis son installation ;
- un dispositif de détection de la température de fonctionnement de la courroie ;
- un dispositif d'avertissement de la durée de vie restante.

D'autres caractéristiques et avantages de l'invention apparaîtront à la lecture de la description du cas particulier d'une courroie de distribution de moteur automobile et du cas général d'une courroie de transmission, illustrée par les figures suivantes qui sont, outre la figure 1 déjà décrite :

- figure 2 : une représentation graphique d'une cartographie de la température de la courroie en fonction du régime et de la charge de son moteur d'entraînement ;
- figure 3 : une représentation de la correction de la réponse du thermocouple en fonction du régime du moteur d'entraînement de la courroie ;
- figure 4 : un exemple d'organigramme du procédé appliqué à une courroie de distribution de moteur automobile ;
- figure 5 : un exemple de représentation graphique des fonctions de vieillissement des variables d'endommagement d'une courroie ;
- figures $6_a$, $6_b$, $7_a$ et $7_b$ : quatre illustrations des méthodes de calcul de durée de vie restante ;
- figure 8 : un exemple d'organigramme de prise en compte des arrêts du moteur dans le procédé appliqué à une courroie de distribution de moteur automobile ;
- figure 9 : des exemples d'endommagement des dents et du câblé de la courroie pendant les arrêts du moteur ;
- figure 10 : une représentation graphique d'un exemple de loi de refroidissement de la courroie en fonction du temps ;
- figure 11 : une représentation graphique d'un exemple de loi d'endommagement de la courroie en fonction de la température de refroidissement de la courroie ;
- figure 12 : un exemple d'organigramme du procédé appliqué à une courroie de transmission en général ;
- figure 13 : un exemple d'incrément d'endommagement des dents en fonction du régime et de la charge du moteur d'entraînement de la courroie.

Le procédé selon l'invention, actif pendant le fonctionnement de la courroie entraînée par des poulies, incrémente avec un pas de temps fixe $\Delta t$ une ou plusieurs variables d'endommagement relatives aux différents modes de défaillance de la courroie. La valeur des incréments d'endommagement est calculée en fonction des paramètres caractérisant le point de fonctionnement du moteur, soit son régime et sa charge, et la température de fonctionnement de la courroie. La valeur de ses incréments est aussi pondérée par un facteur de vieillissement, pour tenir compte de l'évolution temporelle de certaines des propriétés physiques de l'élastomère sous l'effet de l'endommagement, comme l'augmentation de la dureté et de la raideur.

La durée de vie restante, évaluée en kilométrage dans le cas d'une courroie de distribution équipant un véhicule, ou en heures d'utilisation dans le cas d'une courroie équipant une autre sorte de machine, est calculée par le procédé pour prévoir le remplacement de la courroie au bon moment. Pour cela, une hypothèse est faite sur la vitesse d'endommagement futur de la courroie. Cette hypothèse peut être que la vitesse moyenne d'endommagement futur sera égale à la vitesse moyenne d'endommagement depuis le début de la vie de la courroie ou bien qu'elle sera égale à une moyenne fixée préalablement.

Une fois calculée, cette durée de vie restante est communiquée à un service d'entretien du moteur via un moyen de communication ou au conducteur du véhicule dans le cas d'une courroie de distribution. Il est également possible d'alerter le service ou le conducteur dès qu'une des variables d'endommagement dépasse une valeur limite prédéterminée.

Dans le cas d'une courroie de distribution de moteur automobile, à combustion interne, les modes de défaillance typiques sont :

- l'arrachement d'une dent affaiblie par les sollicitations mécaniques répétées, ainsi que par les sollicitations thermiques ;
- la rupture du câblé, qui est fatigué par les mouvements de flexion et de contre-flexion qu'il réalise en s'enroulant autour des poulies et qui finit par rompre.

Ce procédé est réalisé par une unité de calcul électronique embarquée sur le véhicule, telle que le calculateur de contrôle moteur, ou tout autre calculateur ayant accès aux valeurs de régime instantané N ou de charge C du moteur, par exemple par l'intermédiaire d'une mesure de la pression des gaz dans le collecteur d'admission dans le cas d'un moteur à essence, ou du débit de carburant dans le cas d'un moteur Diesel. Il doit avoir accès au kilométrage du véhicule, par intégration de la vitesse véhicule par exemple.

Pour sa mise en oeuvre, le procédé nécessite de plus un des trois dispositifs suivants de détection de la température de fonctionnement θ de la courroie de distribution :

- un thermocouple placé dans le compartiment de la courroie de distribution ;
- un moyen de calcul de cette température θ, implanté dans le calculateur, réalisé par un algorithme à partir par exemple d'une équation différentielle (e1) de la forme suivante :

$$\tau * \frac{d\theta}{dt} + \theta = \theta_p(N,C)$$

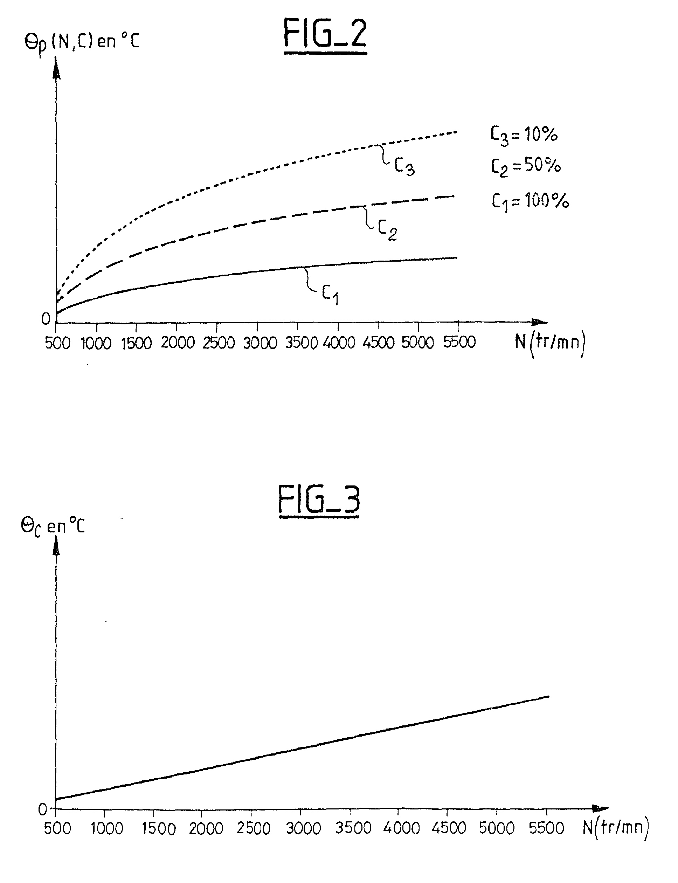

$\tau$ étant une constante préalablement calibrée, et $\theta_p(N, C)$ étant une cartographie de la température en fonction du régime N et de la charge C stockée dans la mémoire du calculateur, dont une représentation graphique constitue la figure 2. Le régime N est exprimé en tours par minute et la température en degrés Celsius. La courbe $C_1$ en pointillés correspond à une charge du moteur égale à 100% du couple maximal, la courbe $C_2$ en tirets correspond à une charge de 50% et la courbe $C_3$ à une charge de 10%.

- un thermocouple placé dans le compartiment de la courroie de distribution, dont la réponse est corrigée par un moyen de calcul, implanté dans le calculateur, contenant un algorithme qui tient compte de l'élévation de température causée par la chaleur que génère la courroie dans ses mouvements de flexion et de contre-flexion. La température de fonctionnement de la courroie est alors la somme de la température délivrée par le thermocouple et de la correction $\theta_c$ calculée par l'algorithme. La figure 3 est une représentation de la correction $\theta_c$, en degrés Celsius, de la réponse du thermocouple en fonction du régime N.

Le pas de temps $\Delta t$, qui correspond à la période de récurrence des incrémentations, est de l'ordre de 0.1 seconde.

Pour une courroie de distribution, deux variables d'endommagement sont prises en compte. Ce sont :

- $D_{dent}$, qui représente l'endommagement des dents de la courroie dû aux sollicitations mécaniques et thermiques, et qui est associé au mode de défaillance qualifié d' « arrachement de dent » ;
- $D_{cable}$, qui représente l'endommagement du câblé dû aux mouvements de flexion et de contre-flexion, pendant l'enroulement de la courroie autour des poulies, ainsi qu'à la température. $D_{cable}$ est associé au mode de défaillance « rupture de câblé ».

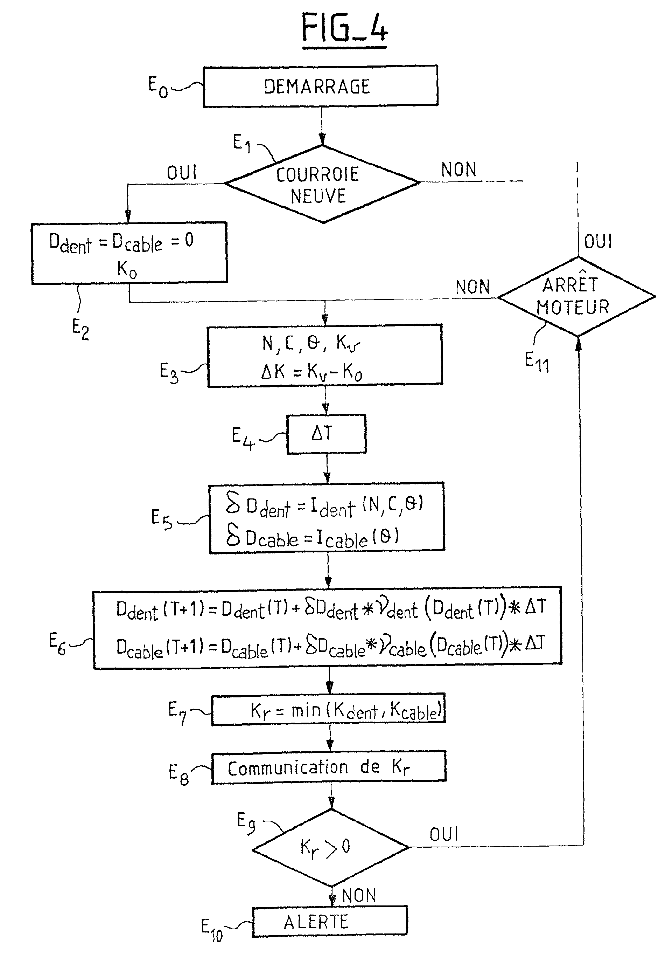

Comme le montre l'organigramme de la figure 4, le procédé selon l'invention comporte, au moment du démarrage du moteur à l'étape $E_0$, une première étape $E_1$ de vérification du caractère neuf de la courroie, montée sur le véhicule.

Dans le cas où cette courroie serait neuve, l'étape suivante $E_2$ consiste en une initialisation des variables d'endommagement $D_{dent}$ et $D_{cable}$ : elles prennent la valeur nulle. Une troisième variable $K_0$ est initialisée à la valeur du kilométrage du véhicule, lors du montage de cette courroie neuve.

Après cette initialisation, le procédé comporte une étape $E_3$ d'acquisition des paramètres de fonctionnement instantanés, soit le régime N du moteur en tours par minute, la charge C du moteur en pourcentage du couple maximal, la température de fonctionnement $\theta$ de la courroie en degrés Celsius, et le kilométrage actuel $K_v$ du véhicule. Le kilométrage $\Delta K$ parcouru par le véhicule depuis le montage de la courroie neuve est égal à la différence entre le kilométrage actuel $K_v$ et la variable $K_0$ initialisée lors du montage de la courroie neuve :

$$\Delta K = K_v - K_0$$

Une quatrième étape $E_4$ concerne le calcul du nombre de tours moteur $\Delta T$ réalisés depuis la dernière itération, selon l'équation suivante (e2) établie à partir du régime N (tr/min) et du pas de temps $\Delta t$ en secondes :

$$\Delta T = N * {}^{\Delta t}/_{60}$$

Puis, à l'étape $E_5$ d'incrémentation de chacune des variables d'endommagement, l'incrément $\delta D_{dent}$ d'endommagement des dents $D_{dent}$, causé aux dents de la courroie par un tour de moteur, est considéré comme une fonction du couple transmis par la courroie et de la température de fonctionnement $\theta$ de celle-ci. Comme ce couple transmis est lié au régime N et à la charge C du moteur, $\delta D_{dent}$ est donc une fonction de N, C et $\theta$, appelée $I_{dent}$ :

$$(e3): \quad \delta D_{dent} = I_{dent}(N, C, \theta)$$

Une solution consiste à considérer que l'influence de la température suit la loi d'Arrhenius, c'est-à-dire que l'endommagement provoqué' par la température $\theta_f$ de fonctionnement est égal à celui provoqué à une température de fonctionnement de référence $\theta_0$ multiplié par le facteur suivant :

$$e^{K_d\left[1/\theta_0 - 1/\theta_f\right]}$$

dans lequel $K_d$ est une constante préalablement calibrée.

L'influence du régime N et de la charge C du moteur est cartographiée, c'est-à-dire que les valeurs de $I_{dent}$ (N, C, $\theta_0$) à la température de référence $\theta_0$ sont mémorisées dans le calculateur sous forme d'une table, dont un exemple est représenté sur la figure 13. Ladite fonction $I_{dent}$ (N, C, $\theta_0$) peut être obtenue à partir d'essais d'endurance de courroies de distribution réalisés sur des moteurs tournant à différents niveaux de régime et de charge. Les courbes $C_1$ à $C_5$ correspondent à une charge du moteur variant de 20 à 100 %. On constate une valeur maximale d'endommagement par tour moteur pour une ou plusieurs valeurs de régime, qui sont des fréquences de résonance du système d'entraînement et constituent des conditions de fonctionnement particulièrement sévères.

L'incrément $\delta D_{cable}$ d'endommagement du câblé $D_{cable}$, causé par un tour de moteur, est supposé indépendant du point de fonctionnement du moteur, mais dépendant de la température $\theta$ de fonctionnement de la courroie, donc $\delta D_{cable}$ est une fonction $I_{cable}(\theta)$ :

$$(e4): \qquad \delta D_{cable} = I_{cable}\left(\theta\right)$$

Comme précédemment, l'influence de la température peut être obtenue à partir d'essais d'endurance de courroies de distribution réalisés à différentes températures et qui ont abouti à une rupture de câblé. Une autre solution consiste à considérer que l'influence de la température suit la loi d'Arrhenius, soit que l'endommagement provoqué par la température $\theta_f$ est égal à celui provoqué à une température de référence $\theta_0$ multiplié par le facteur suivant :

$$e^{K_c\left[\frac{1}{\theta_0} - \frac{1}{\theta_f}\right]}$$

dans lequel $K_c$ est une constante préalablement calibrée.

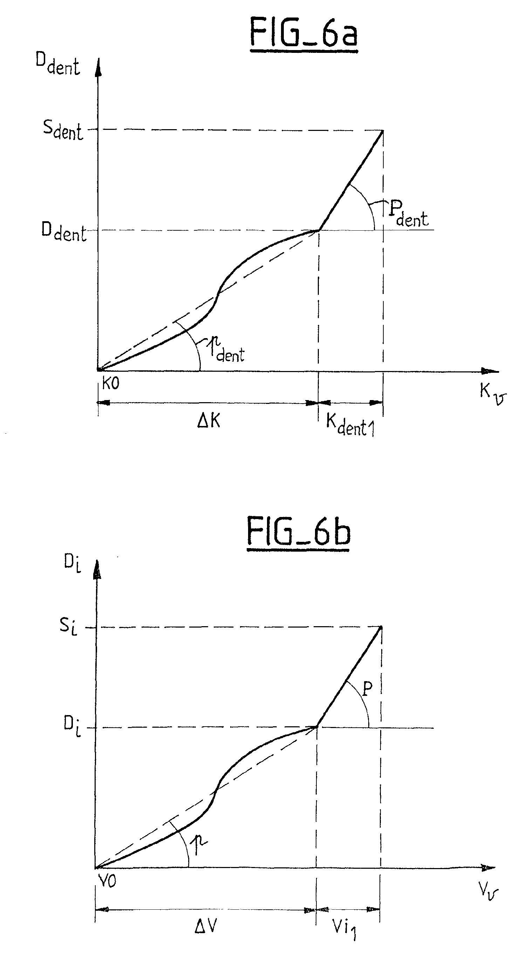

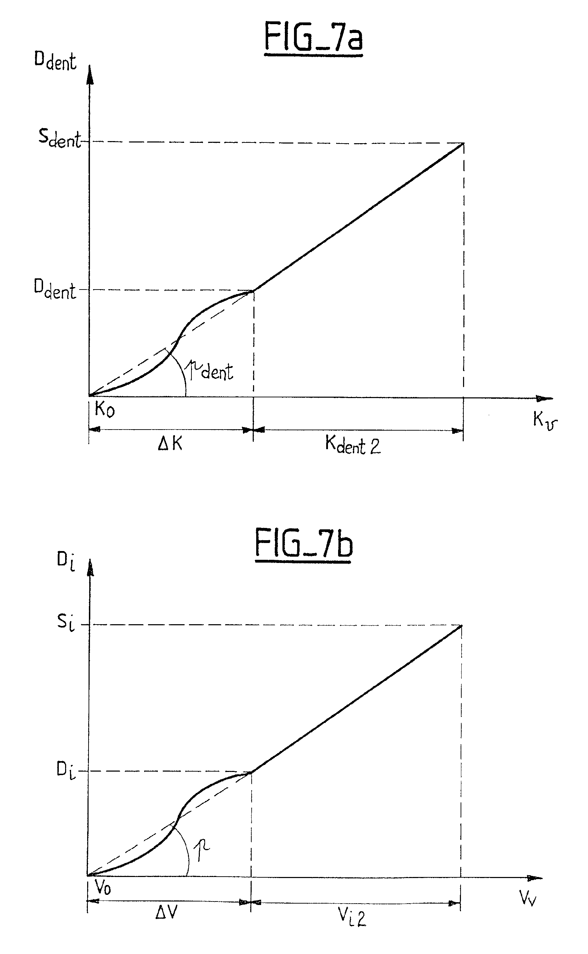

Cette étape $E_5$ d'incrémentation des variables d'endommagement des dents et du câblé est complétée par une étape $E_6$ de pondération des incréments précédemment définis par des fonctions de vieillissement, qui quantifient l'influence de l'état d'endommagement et de vieillissement des dents et du câblé. En effet, les propriétés physiques de l'élastomère constituant la courroie changent en cours de vieillissement de sorte que l'endommagement causé par les sollicitations instantanées des poulies d'entraînement change aussi. Ces fonctions de vieillissement $v_{dent}$ et $v_{cable}$ sont des fonctions croissantes respectivement des variables d'endommagement $D_{dent}$ et $D_{cable}$. Ce sont des fonctions cartographiques, établies à partir de l'évolution temporelle des propriétés physiques de plusieurs courroies pendant des essais d'endurance et stockées sous forme de tables dans la mémoire du calculateur, dont un exemple de représentation graphique est donné par la figure 5. Quand la courroie est neuve, ces fonctions $v_{dent}$ et $v_{cable}$ sont égales à 1. Ainsi, l'endommagement des dents et du câblé au pas de calcul T+1 du moteur est exprimé en fonction de sa valeur au pas de calcul précédent T par les équations suivantes (e5) :

$$D_{dent}\,(T + 1) = D_{dent}(T) + \delta\,D_{dent} * v_{dent}\,(D_{dent}\,(T)) * \Delta T$$

$$D_{cable}\,(T + 1) = D_{cable}(T) + \delta D_{cable} * v_{cable}(D_{cable}\,(T)) * \Delta T$$

Le procédé comporte une septième étape $E_7$ d'évaluation de la durée de vie restante de la courroie, qui consiste à calculer le kilométrage restant à parcourir ou le nombre d'heures de fonctionnement restant avant l'occurrence d'une défaillance, à partir de valeurs maximales $S_{dent}$ et $S_{cable}$ de chacune des variables d'endommagement $D_{dent}$ et $D_{cable}$ respectives, constantes et préalablement calibrées lors d'essais.

Dans le cas du mode de défaillance qualifié d' « arrachement de dent », le procédé selon l'invention présente plusieurs possibilités de phase de calcul du kilométrage $K_{dent}$ restant à parcourir avant la défaillance.

Un premier mode de calcul considère que l'endommagement $D_{dent}$ des dents de la courroie va se poursuivre à une vitesse $P_{dent}$ moyenne préalablement calibrée en fonction du type de courroie et du type de véhicule. Ainsi, à chaque instant t, le procédé va considérer que l'endommagement $D_{dent}$ des dents observé pour un kilométrage $\Delta K$ parcouru jusqu'à l'instant t, qui a évolué selon une vitesse moyenne $p_{dent}$ due au conducteur lui-même, va évoluer selon la pente moyenne connue $P_{dent}$, comme le montre la figure $6_a$, qui représente l'endommagement $D_{dent}$ en fonction du kilométrage actuel $K_v$ du véhicule. Le kilométrage $K_{dent1}$ restant à parcourir avant la défaillance, soit avant que la valeur de l'endommagement $D_{dent}$ n'atteigne la valeur maximale $S_{dent}$, est alors calculé selon l'équation suivante (e6) :

$$K_{dent1} = (S_{dent} - D_{dent})/P_{dent}$$

Ce mode de calcul est intéressant car il donne des résultats stables lorsque la courroie est en début de vie.

Un second mode de calcul considère que l'endommagement $D_{dent}$ des dents de la courroie va se poursuivre à une vitesse moyenne $p_{dent}$ identique à la vitesse moyenne d'endommagement depuis le début de la vie de la courroie, comme le montre la figure $7_a$. Le kilométrage $K_{dent2}$ restant à parcourir avant la défaillance, soit avant que la valeur de l'endommagement $D_{dent}$ n'atteigne la valeur maximale $S_{dent}$, est alors calculé à chaque instant selon l'équation suivante (e7), en fonction du kilométrage $\Delta K$ déjà parcouru :

$$K_{dent2} = \Delta K * [(S_{dent}/D_{dent}) - 1]$$

L'avantage de ce mode de calcul est de donner des résultats précis lorsque la courroie est en fin de vie.

Un troisième mode de calcul est basé sur une combinaison des deux modes précédents pour présenter leurs avantages respectifs en début et en fin de vie de la courroie. Le kilométrage $K_{dent1}$ est pondéré par $(1-D_{dent}/S_{dent})$ qui a une valeur élevée proche de 1 lorsque la courroie est en début de vie ($D_{dent}$ proche de 0). Le kilométrage $K_{dent2}$ est pondéré par $(D_{dent}/S_{dent})$ qui a une valeur élevée proche de 1 lorsque la courroie est en fin de vie ($D_{dent}$ proche de $S_{dent}$). Ainsi, $K_{dent1}$ prend une part prépondérante dans $K_{dent3}$ en début de vie de courroie alors que c'est $K_{dent2}$ qui prend une part prépondérante en fin de vie. Le calcul du kilométrage $K_{dent3}$ restant à parcourir est calculé selon l'équation (e8) :

$$K_{dent3} = \{1 - D_{dent}/S_{dent}\} * K_{dent1} + \{D_{dent}/S_{dent}\} * K_{dent\,2}$$

Dans le cas du mode de défaillance qualifié de « rupture de câblé », le procédé selon l'invention présente les mêmes modes de calcul du kilométrage $K_{cable}$ restant à parcourir avant la défaillance que les modes de calcul de $K_{dent}$, soit selon les trois équations suivantes (e9, e10 et e11) :

$$K_{cable1} = (S_{cable} - D_{cable})/P_{cable}$$

$$K_{cable2} = \Delta K * [(S_{cable}/D_{cable}) - 1]$$

$$K_{cable3} = \{1 - D_{cable}/S_{cable}\} * K_{cable1} + \{D_{cable}/S_{cable}\} * K_{cable2}$$

Le kilométrage $K_r$ restant à parcourir avant la survenue d'une défaillance est alors la valeur la plus petite des deux kilométrages calculés $K_{dent}$ et $K_{cable}$ :

$$K_r = \min(K_{dent}, K_{cable})$$

L'étape suivante $E_8$ du procédé consiste à communiquer le kilométrage restant avant la survenue d'une défaillance, en l'affichant par exemple au tableau de bord du véhicule. Cette étape est suivie d'une autre étape $E_9$ de lecture du kilométrage $K_r$ restant à parcourir pour vérifier s'il est nul ou négatif, ce qui signifierait alors que la courroie doit être remplacée et qu'il faut en alerter le conducteur à l'étape suivante $E_{10}$, de façon sonore ou lumineuse. Par contre, si le test indique que la valeur de $K_r$ est positive, le procédé reprend son déroulement à l'étape $E_3$ d'acquisition des paramètres de fonctionnement instantanés.

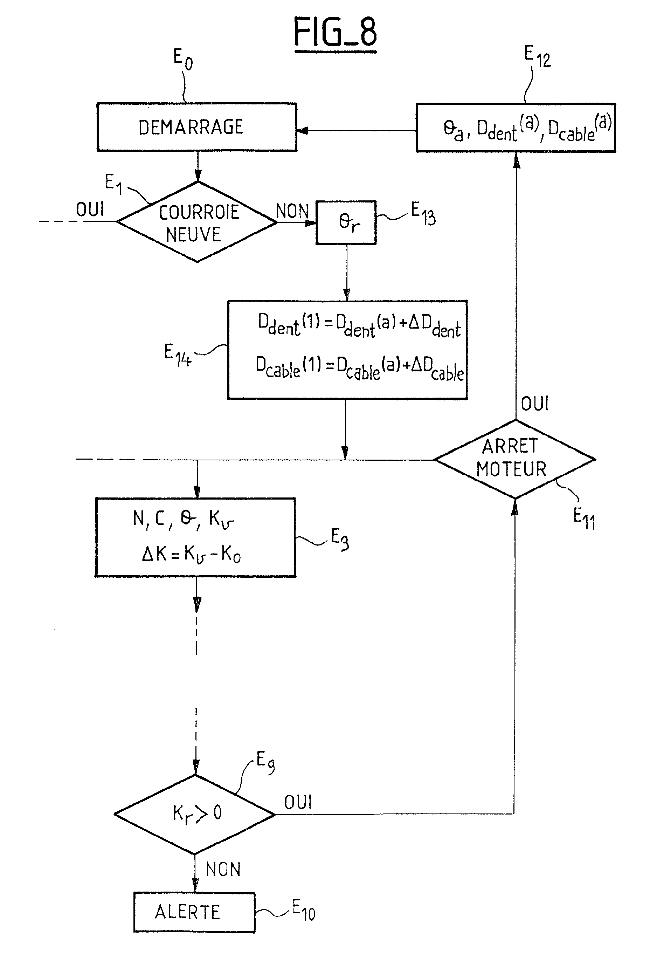

Selon une autre caractéristique de l'invention, le procédé prend en compte les arrêts du moteur au cours desquels la courroie continue à être endommagée par sa température qui ne chute pas immédiatement, en particulier car la température ambiante au voisinage du moteur reste élevée un certain temps. Pour cela, l'organigramme de la figure 4 doit être complété par les étapes suivantes, qui apparaissent sur l'organigramme de la figure 8. Dès qu'un arrêt du moteur est détecté à l'étape $E_{11}$, la température $\theta_a$ de la courroie au moment $t_a$ de l'arrêt est mémorisée dans le calculateur, à l'étape $E_{12}$, ainsi que les valeurs d'endommagement $D_{dent}(a)$ des dents et $D_{cable}(a)$ du câblé.

Au moment $t_r$ d'un redémarrage du moteur, détecté à l'étape $E_0$, et en présence d'une courroie qui n'est pas neuve, constatée à l'étape $E_1$, le procédé mesure la température $\theta_r$ de la courroie de distribution, en degrés Celsius, à l'étape $E_{13}$ puis procède à une étape $E_{14}$ d'incrémentation des valeurs d'endommagement, qui sont des fonctions de la température $\theta_a$ de la courroie au moment de l'arrêt du moteur et de sa température $\theta_r$ au moment du redémarrage. Les incréments $\Delta D_{dent}$ et $\Delta D_{cable}$ d'endommagement des dents et du câblé, causé à la courroie entre l'arrêt à $t_a$ et le redémarrage à $t_r$ du moteur, sont des fonctions cartographiques des températures $\theta_a$ et $\theta_r$, stockées sous forme de tables dans la mémoire du calculateur, exprimées selon les équations (e12):

$$(e\ 12): \quad \Delta D_{dent} = I'_{dent}\left(\theta_a, \theta_r\right)$$
$$\Delta D_{cable} = I'_{cable}\left(\theta_a, \theta_r\right)$$

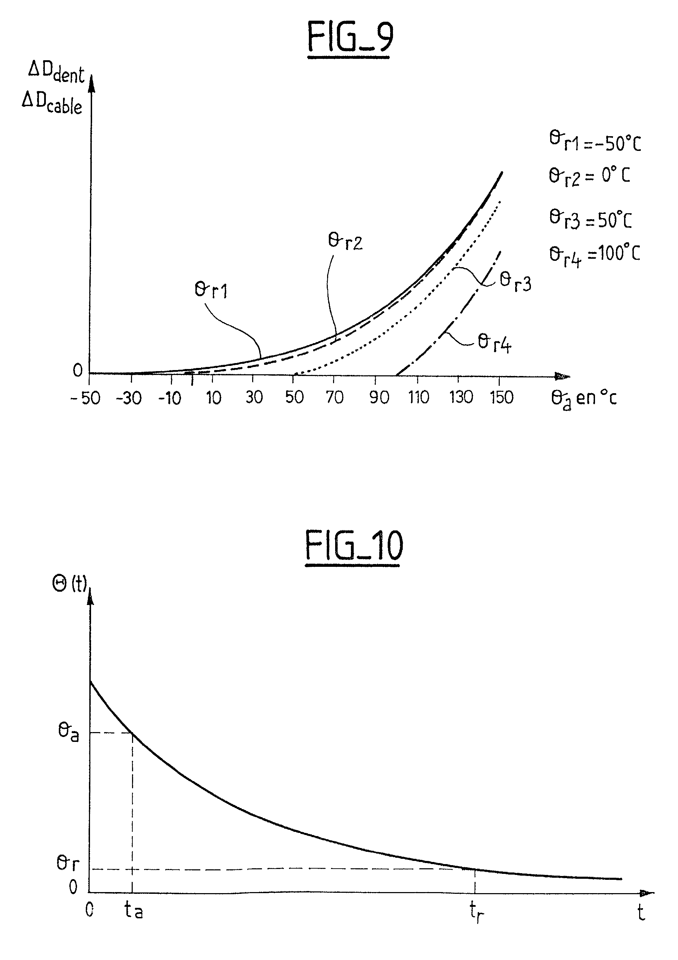

et représentés sur la figure 9 pour quatre valeurs de $\theta_r$ allant de -50°C à +100°C.

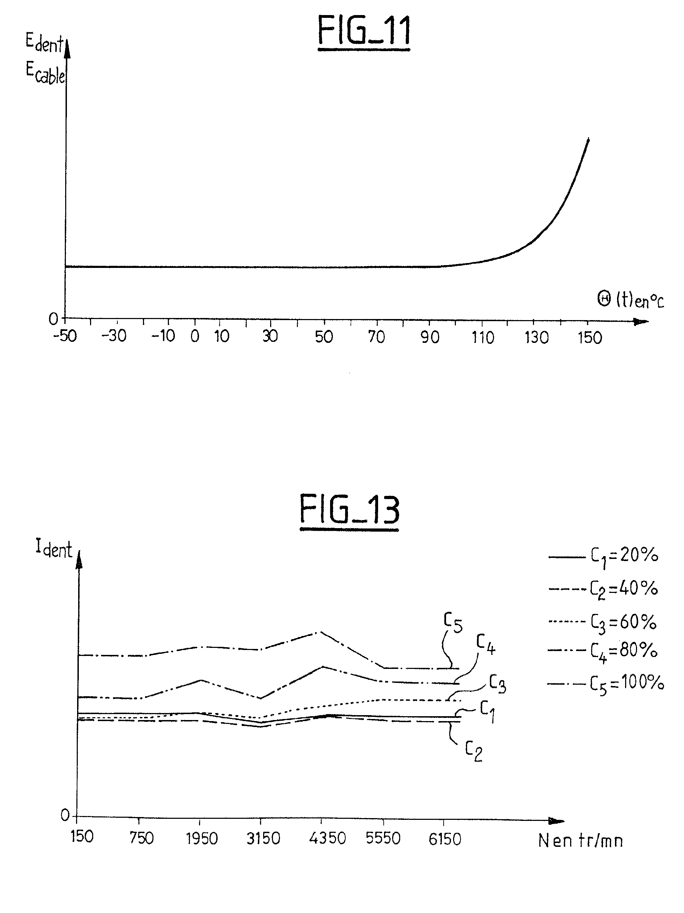

Ces fonctions $I'_{dent}$ et $I'_{cable}$ sont par exemple construites à partir d'une loi de refroidissement $\Theta(t)$ de la courroie en fonction du temps, lorsque le moteur est arrêté, qui correspond à une décroissance de la température. Cette loi peut être obtenue par une analyse thermique ou par une mesure et avoir l'allure représentée sur la figure 10 entre les instants $t_a$ d'arrêt du moteur et $t_r$ de redémarrage. Il est aussi nécessaire de connaître les lois d'endommagement $E_{dent}$ et $E_{cable}$ des dents et du câblé respectivement en fonction de la température de refroidissement $\Theta(t)$ et en dehors de toute sollicitation mécanique, excepté bien sûr la tension de pose de la courroie. La figure 11 est un exemple de ces lois d'endommagement. Les endommagements causés pendant une période d'arrêt du moteur s'étendent de l'instant $t_a$ à l'instant $t_r$ et sont exprimés par les équations (e13) suivantes :

$$I'_{dent}\left(t_a, t_r\right) = \int_{t_a}^{t_r} E_{dent}\left(\Theta(t)\right)dt$$

$$I'_{cable}\left(t_a, t_r\right) = \int_{t_a}^{t_r} E_{cable}\left(\Theta(t)\right)dt$$

Ainsi, il est possible de construire des fonctions cartographiques du temps $I'_{dent}(t_a, t_r)$ et $I'_{cable}(t_a, t_r)$, qui sont ensuite transformées en fonctions cartographiques de la température $I'_{dent}(\theta_a, \theta_r)$ et $I'_{cable}(\theta_a, \theta_r)$ grâce à la loi de refroidissement $\Theta(t)$ qui relie le temps à la température.

L'endommagement des dents et du câblé au premier pas de calcul (T=1) du moteur après le redémarrage est exprimé en fonction de sa valeur au moment du précédent arrêt, à laquelle est ajouté l'incrément causé entre l'arrêt et le redémarrage du moteur, par les équations suivantes (e14) :

$$D_{dent}(1) = D_{dent}(a) + \Delta D_{dent}$$

$$D_{cable}(1) = D_{cable}(a) + \Delta D_{cable}$$

Le procédé selon l'invention est également applicable au cas plus général d'une courroie de transmission, entraînée par au moins une poulie en rotation sous l'action d'un moteur dont on connaît le régime et la charge. Il est destiné à l'estimation de la durée de vie restante d'une courroie avant son remplacement, selon un nombre quelconque de modes de défaillance et de valeurs d'endommagement.

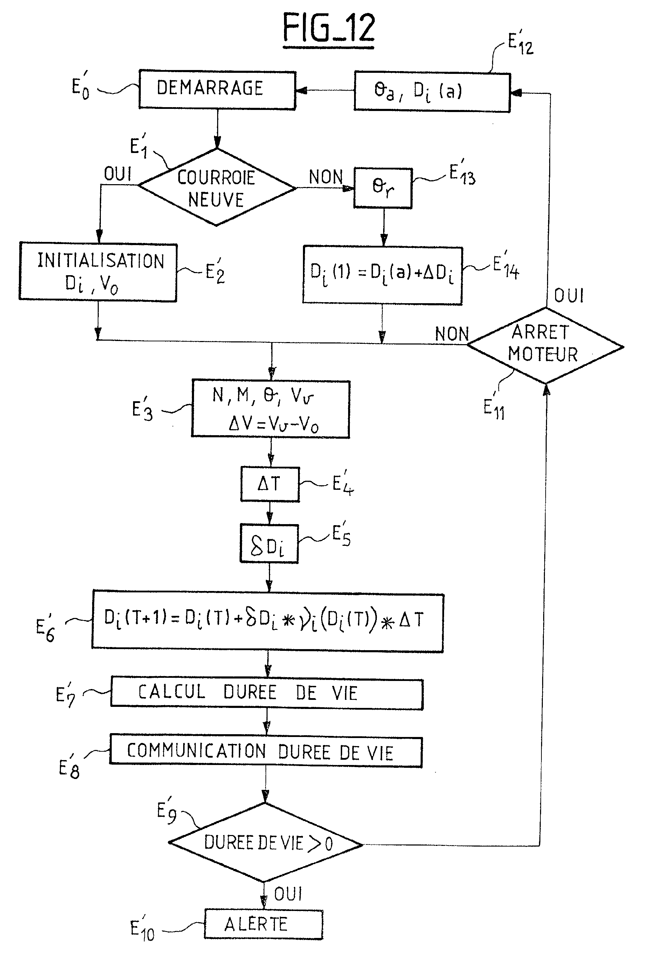

Le procédé comporte les étapes suivantes, représentées sur l'organigramme de la figure 12 :

$E'_0$ : démarrage du moteur d'entraînement de la courroie,

$E'_1$ : vérification du caractère neuf de la courroie,

$E'_2$ : initialisation de plusieurs variables d'endommagement, $D_1$, $D_2$, ..., $D_i$...choisies, et d'une variable $V_0$ représentative du kilométrage parcouru depuis le montage d'une courroie neuve dans le cas d'une courroie équipant un véhicule automobile ou de la durée écoulée depuis le montage d'une courroie neuve équipant une autre sorte de machine,

$E'_3$: acquisition des paramètres de fonctionnement instantanés du système d'entraînement par courroie, soit la vitesse de rotation N de l'arbre moteur, en tours/minute, le couple M transmis par la courroie, en pourcentage du couple maximal, ou d'autres grandeurs auxquelles ce couple est lié, la température de fonctionnement $\theta$ de la courroie en degrés Celsius, ainsi que la date courante ou le kilométrage courant $V_v$ pour un véhicule. La durée écoulée depuis le montage de la courroie est alors égale à :

$\Delta V = V_v - V_0$, en heures ou en kilomètres.

$E'_4$ : calcul du nombre de tours du moteur $\Delta T$ réalisés depuis la dernière itération,

$E'_5$ : incrémentation des variables d'endommagement à partir du calcul des incréments par tour moteur $\delta D_1$, $\delta D_2$, ..., $\delta D_i$ ...

$E'_6$: pondération des incréments ainsi définis par des fonctions de vieillissement, $\nu_1$, $\nu_2$, ..., $\nu_i$, ..., dépendant respectivement des variables d'endommagement $D_1$, $D_2$, ..., $D_i$... pour obtenir ainsi les valeurs d'endommagement au pas de calcul T+1 du moteur en fonction de leur valeur au pas de calcul précédent T, définies selon les équations (e15) suivantes :

$$D_1(T + 1) = D_1(T) + \delta D_1 * \nu_1(D_1(T)) * \Delta T$$

$$D_2(T + 1) = D_2(T) + \delta D_2 * \nu_2(D_2(T)) * \Delta T$$

$$D_i(T + 1) = D_i(T) + \delta D_i * \nu_i(D_i(T)) * \Delta T$$

ces valeurs $\nu_i$ étant égales à 1 quand la courroie est neuve.

$E'_7$ : calcul de la durée de vie restante de la courroie, avant de procéder à son remplacement,

$E'_8$ : communiquer sa durée de vie restante au service de maintenance, par affichage au tableau de contrôle du moteur entraînant la courroie ou par transmission à un service d'entretien ou de maintenance par un moyen de télécommunication,

$E'_9$ : test sur le signe de la durée de vie restante calculée, pour envisager son remplacement en cas de valeur négative ou nulle, ou pour reprendre le déroulement du procédé à l'étape $E'_3$ en cas de valeur positive,

$E'_{10}$: émission d'un signal d'alerte dans le cas où la durée de vie restante serait négative ou nulle.

L'étape $E'_7$ de calcul de la durée de vie restante de la courroie, avant de procéder à son remplacement, est réalisée à partir des valeurs maximales acceptables $S_1$, $S_2$, ..., $S_i$... de chaque variable d'endommagement $D_1$, $D_2$, ..., $D_i$... respectivement, ces maxima constants étant préalablement calibrés. Pour tout mode de défaillance, la durée de vie restante $V_i$ par exemple, avant une défaillance peut être calculée par l'une des méthodes suivantes.

Une première méthode de calcul de la durée de vie restante $V_{i1}$ est basée sur l'hypothèse que l'endommagement instantané de la courroie, qui a évolué selon une vitesse moyenne p due au fonctionnement propre du moteur d'entraînement de la courroie, va se poursuivre à une vitesse P préalablement calibrée, de sorte que la durée de vie restante est définie à partir de la valeur maximale $S_i$ de la variable d'endommagement $D_i$ par l'équation (e16) suivante :

$$V_{i1} = (S_i - D_i)/P$$

La figure $6_b$ représente l'endommagement $D_i$ en fonction du nombre actuel d'heures de fonctionnement $V_v$ de la courroie.

Une deuxième méthode de calcul est basée sur l'hypothèse que l'endommagement instantané de la courroie va se poursuivre, comme le montre la figure $7_b$, à la même vitesse moyenne p que depuis le début de la vie de la courroie, de telle sorte que la durée de vie restante est définie par l'équation (e17) suivante, à partir de la durée $\Delta V$ écoulée depuis le montage de la courroie :

$$V_{i2} = \Delta V * [(S_i/D_i) - 1]$$

Selon une troisième méthode, le calcul est basé sur une combinaison des deux autres méthodes, dans laquelle $V_{i1}$ est pondéré par $(1-D_i/S_i)$ et $V_{i2}$ est pondéré par $(D_i/S_i)$. Ainsi la durée de vie restante s'exprime par l'équation (e18):

$$V_{i3} = \{1 - D_i/S_i\} * V_{i1} + \{D_i/S_i\} * V_{i2}$$

La durée de vie restante $V_r$ de la courroie avant l'occurrence d'une défaillance est alors la plus petite des durées calculées pour toutes les variables d'endommagement $D_1$, $D_2$,...$D_i$....

$$V_r = \min(V_1, V_2,...V_i...)$$

Comme pour le procédé d'estimation d'une courroie de distribution dans un moteur de véhicule automobile décrit précédemment, le procédé d'estimation du vieillissement d'une courroie de transmission entraînée par un moteur comporte une caractéristique supplémentaire de prise en compte des arrêts du moteur, pendant lesquels la température de la courroie ne chute pas immédiatement, donc continue à se détériorer.

Pour cela, il comporte les étapes supplémentaires suivantes. Après une étape $E'_{11}$ de détection d'un arrêt du moteur, une étape $E'_{12}$ consiste à mémoriser dans le calculateur la température $\theta_a$ de la courroie au moment $t_a$ de l'arrêt, ainsi que les valeurs d'endommagement $D_1(a), D_2(a),..., D_i(a), ...$

Au moment $t_r$ d'un redémarrage du moteur, détecté à l'étape $E'_0$, la température $\theta_r$ de la courroie de transmission est mesurée, en degrés Celsius, à l'étape $E'_{13}$, puis les incréments $\Delta D_1, ..., \Delta D_i, ...$ des valeurs d'endommagement sont calculés en fonction de la température $\theta_a$ de la courroie au moment de l'arrêt du moteur et de sa température $\theta_r$ au moment du redémarrage, à une étape $E'_{14}$. Ainsi, les valeurs d'endommagement $D_i(1)$ au premier pas de calcul (T=1) du moteur après son redémarrage sont exprimées en fonction de leur valeur $D_i(a)$ au moment du précédent arrêt par les équations suivantes (e19) :

$$D_i(1) = D_i(a) + \Delta D_i$$

Le dispositif de mise en oeuvre du procédé appliqué à une courroie de transmission en général est identique à celui décrit auparavant pour une courroie de distribution.

Le procédé selon l'invention se distingue de l'art antérieur par le fait qu'il prévient tous les modes de défaillance connus des courroies, et non un mode en particulier, sans nécessiter d'équipements techniques particuliers implantés dans la courroie, tels que des matériaux fluorescents, des conducteurs électriques, ou placés sur le système d'entraînement de la courroie, tels qu'un capteur de position angulaire ou un tendeur automatique spécial par exemple.

Dans le cas d'une courroie de distribution d'un moteur à combustion interne dans un véhicule automobile, le procédé nécessite uniquement l'implantation d'un dispositif de mesure ou de calcul de la température de fonctionnement de la courroie, puisque la mesure de la vitesse de rotation de l'arbre moteur et celle du couple moteur, qui permet d'en déduire le couple transmis par la courroie sont couramment obtenues par les systèmes déjà présents sur le véhicule. De même, le kilométrage instantané du véhicule est également accessible.

## Revendications

1. Procédé d'évaluation de la durée de vie restante d'une courroie de transmission, entraînée par au moins une poulie en rotation sous l'action d'un moteur dont on connaît le régime et la charge, **caractérisé en ce qu'**il comporte une phase d'estimation du vieillissement de la courroie qui consiste à incrémenter, avec un pas de temps fixe ($\Delta t$), une ou plusieurs variables d'endommagement ($D_i$) relatives aux différents modes de défaillance de la courroie et **en ce que** la valeur des incréments d'endommagement ($\delta D_i$) est calculée en fonction des paramètres caractérisant le point de fonctionnement du moteur, soit son régime (N) et sa charge (C), et la température de fonctionnement ($\theta$) de la courroie, et **en ce qu'**il comporte ensuite une phase d'évaluation de la durée de vie restante de la courroie à partir de valeurs maximales ($S_i$) prédéterminées pour chaque variable ($D_i$) d'endommagement.

2. Procédé d'évaluation selon la revendication 1, **caractérisé en ce que** la valeur de l'incrément ($\delta D_i$) de chaque variable d'endommagement de la courroie est pondérée par un facteur de vieillissement, qui est une fonction croissante de ladite variable d'endommagement pour tenir compte de l'évolution temporelle de certaines des propriétés physiques de l'élastomère sous l'effet de l'endommagement, comme l'augmentation de la dureté et de la raideur.

3. Procédé d'évaluation selon la revendication 1, **caractérisé en ce que** la durée de vie restante ($V_{i2}$) de la courroie est évaluée selon l'hypothèse que l'endommagement de la courroie se poursuivra à la même vitesse moyenne que pendant la durée écoulée ($\Delta V$) depuis le début de la vie de la courroie, pour prévoir le remplacement de la courroie avant que les variables d'endommagement ($D_i$) n'atteignent chacune leur valeur maximale ($S_i$) :

$$V_{i2} = \Delta V * [(S_i/D_i) - 1]$$

4. Procédé d'évaluation selon la revendication 1, **caractérisé en ce que** la durée de vie restante ($V_{i1}$) de la courroie est évaluée selon l'hypothèse que l'endommagement de la courroie, qui jusqu'à l'instant (t) a évolué selon une vitesse moyenne (p) due au fonctionnement propre du moteur d'entraînement de la courroie, va évoluer selon une vitesse moyenne (P) fixée préalablement au début de la vie de la courroie, pour prévoir le remplacement de la courroie avant que les variables d'endommagement ($D_i$) n'atteignent chacune leur valeur maximale ($S_i$) :

$$V_{i1} = \frac{(S_i - D_i)}{P}$$

**5.** Procédé d'évaluation selon les revendications 1, 3 et 4, **caractérisé en ce que** l'évaluation de la durée de vie restante ($V_{i3}$) de la courroie est basée sur une combinaison des deux hypothèses où la durée de vie restante ($V_{i1}$) est pondérée par ($1-D_i/S_i$) et la durée de vie restante ($V_{i2}$) est pondérée par ($D_i/S_i$) et s'exprime par l'équation :

$$V_{i3} = \{1 - D_i/S_i\} * V_{i1} + \{D_i/S_i\} * V_{i2}$$

**6.** Procédé d'évaluation selon les revendications 1, 3, 4 et 5, **caractérisé en ce que** la durée de vie restante ($V_r$) de la courroie avant l'occurrence d'une défaillance est la plus petite des durées calculées pour toutes les variables d'endommagement ($D_1, D_2,...D_i...$):

$$V_r = \min V_1, V_2, ... V_i ...)$$

**7.** Procédé d'évaluation selon l'une des revendications 1 à 6, **caractérisé en ce qu'**il comporte les étapes suivantes :

- $E'_0$ : démarrage du moteur d'entraînement de la courroie,
- $E'_1$ : vérification du caractère neuf de la courroie,
- $E'_2$ : initialisation de plusieurs variables d'endommagement ($D_1, D_2, ..., D_i...$) choisies, et d'une variable ($V_0$) représentative de la durée écoulée ou du nombre de kilomètres effectués depuis le montage d'une courroie neuve,
- $E'_3$: acquisition des paramètres de fonctionnement instantanés du système d'entraînement par courroie, soit la vitesse de rotation (N) de l'arbre moteur, le couple (M) transmis par la courroie, en pourcentage du couple maximal, ou d'autres grandeurs auxquelles ce couple est lié, et la température de fonctionnement ($\theta$) de la courroie, ainsi que la date courante ou le kilométrage courant ($V_v$) pour un véhicule, la durée écoulée depuis le montage de la courroie étant alors égale à :

$$\Delta V = V_v - V_0$$

- $E'_4$ : calcul du nombre de tours du moteur ($\Delta T$) réalisés depuis la dernière itération,
- $E'_5$ : incrémentation des variables d'endommagement à partir du calcul des incréments par tour moteur ($\delta D_1, \delta D_2, ..., \delta D_i...$),
- $E'_7$ : calcul de la durée de vie restante de la courroie, avant de procéder à son remplacement, à partir des valeurs maximales acceptables, constantes et préalablement calibrées, ($S_1,...S_i,...$) de chaque variable d'endommagement ($D_1,...D_i,...$) respectivement.

**8.** Procédé d'évaluation selon la revendication 7, **caractérisé en ce qu'**il comporte de plus une étape ($E'_6$) de pondération des incréments d'endommagement par des fonctions de vieillissement, ($v_1,...v_i, ...$), qui sont des fonctions croissantes respectivement des variables d'endommagement ($D_1,...D_i,...$) établies par cartographie, pour obtenir ainsi les valeurs d'endommagement au pas de calcul (T+1) du moteur en fonction de sa valeur au pas précédent (T), définies selon les équations suivantes :

$$D_1(T+1) = D_1(T) + \delta D_1 * v_1(D_1(T)) * \Delta T$$

$$D_i(T+1) = D_i(T) + \delta D_{i_i} * v_i(D_i(T)) * \Delta T$$

ces fonctions de vieillissement étant égales à 1 quand la courroie est neuve.

**9.** Procédé d'évaluation selon l'une des revendications 7 ou 8, **caractérisé en ce qu'**il comporte de plus les étapes suivantes :

- E'$_8$ : communication de la durée de vie restante au service de maintenance, par affichage au tableau de contrôle du moteur entraînant la courroie ou par transmission grâce à un moyen de télécommunication,
- E'$_9$ : test sur le signe de la durée de vie restante calculée, pour envisager son remplacement en cas de valeur négative ou nulle, ou pour reprendre le déroulement du procédé à l'étape (E'$_3$) d'acquisition des paramètres de fonctionnement en cas de valeur positive,
- E'$_{10}$ : émission d'un signal d'alerte dans le cas où la durée de vie restante serait négative ou nulle.

**10.** Procédé d'évaluation selon l'une des revendications 1 à 9, **caractérisé en ce qu'**il comporte une phase de prise en compte des arrêts du moteur, pendant lesquels la courroie continue à se détériorer sous l'effet de la température, comprenant les étapes supplémentaires suivantes :

- E'$_{11}$ : détection d'un arrêt du moteur,
- E'$_{12}$ : mémorisation dans le calculateur de la température ($\theta_a$) de la courroie au moment ($t_a$) de l'arrêt, ainsi que les valeurs d'endommagement ($D_1(a)$, $D_2(a)$,..., $D_i(a)$, ...),
- E'$_0$ : détection d'un redémarrage du moteur à l'instant ($t_r$),
- E'$_{13}$ : mesure de la température ($\theta_r$) de la courroie de transmission,
- E'$_{14}$ : calcul des incréments ($\Delta D_1$, ..., $\Delta D_i$, ...) des valeurs d'endommagement en fonction de la température ($\theta_a$) de la courroie au moment de l'arrêt du moteur et de sa température ($\theta_r$) au moment du redémarrage, de telle sorte que les valeurs d'endommagement ($D_i(1)$) au premier pas de calcul (T=1) du moteur après son redémarrage sont exprimées en fonction de leur valeur ($D_i(a)$) au moment du précédent arrêt par les équations suivantes :

$$D_i(1) = D_i(a) + \Delta D_i$$

**11.** Procédé d'évaluation selon les revendications 1 à 6, **caractérisé en ce que**, dans le cas d'une courroie de distribution de moteur automobile à combustion interne, les variables d'endommagement sont :

- l'endommagement ($D_{dent}$) des dents de la courroie dû aux sollicitations mécaniques et thermiques répétées, et qui est associé à un mode de défaillance qualifié d' « arrachement de dent » ;
- l'endommagement ($D_{cable}$) du câblé dû aux mouvements de flexion et de contre-flexion, pendant l'enroulement de la courroie autour des poulies, ainsi qu'à la température, et qui est associé au mode de défaillance « rupture de câblé ».

**12.** Procédé d'évaluation selon la revendication 11, **caractérisé en ce qu'**il comporte les étapes suivantes :

- E$_0$ : démarrage du moteur du véhicule,
- E$_1$ : vérification du caractère neuf de la courroie,
- E$_2$ : initialisation de deux variables d'endommagement ($D_{dent}$, $D_{cable}$) choisies, et d'une variable ($K_0$) représentative du kilométrage du véhicule depuis le montage d'une courroie neuve,
- E$_3$ : acquisition des paramètres de fonctionnement instantanés du système d'entraînement par courroie, soit la vitesse de rotation (N) du moteur, la charge (C) du moteur, en pourcentage du couple maximal, ou d'autres grandeurs auxquelles ce couple est lié, et la température de fonctionnement ($\theta$) de la courroie, ainsi que le kilométrage courant ($K_v$),
- E$_4$ : calcul du nombre de tours du moteur ($\Delta T$) réalisés depuis la dernière itération,
- E$_5$ : incrémentation des variables d'endommagement à partir du calcul des incréments par tour moteur ($\delta D_{dent}$, $\delta D_{cable}$),
- E$_7$ : évaluation de la durée de vie restante de la courroie, avant de procéder à son remplacement, par calcul du kilométrage restant à parcourir avant l'occurrence d'une défaillance, à partir de valeurs maximales ($S_{dent}$ et $S_{cable}$) de chacune des variables d'endommagement ($D_{dent}$ et $D_{cable}$) respectives, constantes et préalablement calibrées lors d'essais.

**13.** Procédé d'évaluation selon la revendication 12, **caractérisé en ce que** l'incrément ($\delta D_{dent}$) d'endommagement des dents de la courroie causé par un tour moteur est une fonction du régime (N) et de la charge (C) du moteur et de la température de fonctionnement ($\theta$) de la courroie, et **en ce que** l'incrément ($\delta D_{cable}$) d'endommagement

du câblé de la courroie causé par un tour moteur est une fonction de la température de fonctionnement (θ) de la courroie.

**14.** Procédé d'évaluation selon la revendication 13, **caractérisé en ce que** l'endommagement des dents, respectivement du câblé, de la courroie provoqué par la température de fonctionnement ($\theta_f$) de la courroie suit la loi d'Arrhenius, et est égal à celui provoqué par une température de référence ($\theta_0$) multiplié par le facteur suivant:

$$e^{K_d\left[\frac{1}{\theta_0} - \frac{1}{\theta_f}\right]},$$

, respectivement

$$e^{K_c\left[\frac{1}{\theta_0} - \frac{1}{\theta_f}\right]}$$

dans lesquels $K_d$ et $K_c$ sont des constantes préalablement calibrées.

**15.** Procédé d'évaluation selon la revendication 12, **caractérisé en ce qu'**il comporte de plus une étape ($E_6$) de pondération des incréments d'endommagement par des fonctions de vieillissement ($v_{dent}$, $v_{cable}$), qui sont des fonctions croissantes respectivement des variables d'endommagement ($D_{dent}$, $D_{cable}$) établies par cartographie, pour obtenir ainsi les valeurs d'endommagement au pas de calcul (T+1) du moteur en fonction de sa valeur au pas précédent (T), définies selon les équations suivantes :

$$D_{dent}\,(T+1) = D_{dent}\,(T) + \delta D_{dent} * v_{dent}\,(D_{dent}\,(T)) * \Delta T$$

$$D_{cable}\,(T+1) = D_{cable}\,(T) + \delta D_{cable} * v_{cable}\,(D_{cable}\,(T)) * \Delta T$$

ces fonctions de vieillissement étant égales à 1 quand la courroie est neuve.

**16.** Procédé d'évaluation selon l'une des revendications 12 ou 15, **caractérisé en ce qu'**il comporte les étapes supplémentaires suivantes :

- $E_8$ : communication de la durée de vie restante avant la survenue d'une défaillance, par affichage au tableau de bord du véhicule ou par transmission à un service d'entretien ou de maintenance par un moyen de télécommunication,
- $E_9$ : test sur le signe de la durée de vie restante calculée, pour envisager son remplacement en cas de valeur négative ou nulle, ou pour reprendre le déroulement du procédé à l'étape d'acquisition ($E_3$) en cas de valeur positive,
- $E_{10}$ : émission d'un signal d'alerte au conducteur dans le cas où la durée de vie restante serait négative ou nulle.

**17.** Dispositif de mise en oeuvre du procédé d'évaluation selon l'une des revendications précédentes, **caractérisé en ce qu'**il comporte

- une unité de calcul électronique recevant en entrée le régime (N) et la charge (C) du moteur d'entraînement de la courroie et des informations pour calculer la durée d'utilisation de la courroie depuis son installation ;
- un dispositif de détection de la température (θ) de fonctionnement de la courroie ;
- un dispositif d'avertissement de la durée de vie restante.

**18.** Dispositif de mise en oeuvre du procédé d'évaluation selon la revendication 17, **caractérisé en ce que** le dispositif de détection de la température (θ) de fonctionnement de la courroie est un thermocouple placé dans le compartiment de la courroie de distribution.

**19.** Dispositif de mise en oeuvre du procédé d'évaluation selon la revendication 17, **caractérisé en ce que** le dispositif de détection de la température (θ) de fonctionnement de la courroie est un moyen de calcul de cette température, implanté dans le calculateur, réalisé par un algorithme à partir d'une cartographie de la température en fonction du régime (N) et de la charge (C) stockée dans la mémoire du calculateur.

20. Dispositif de mise en oeuvre du procédé d'évaluation selon la revendication 17, **caractérisé en ce que** le dispositif de détection de la température (θ) de fonctionnement de la courroie est un thermocouple placé dans le compartiment de la courroie de distribution, dont la réponse est corrigée par un moyen de calcul, implanté dans le calculateur, contenant un algorithme qui tient compte de l'élévation de température causée par la chaleur que génère la courroie dans ses mouvements de flexion et de contre-flexion, la température de fonctionnement de la courroie étant alors la somme de la température délivrée par le thermocouple et de la correction ($\theta_c$) calculée par l'algorithme.

21. Dispositif de mise en oeuvre du procédé d'évaluation selon la revendication 17, **caractérisé en ce que** la durée d'utilisation de la courroie depuis son installation est exprimée en kilomètres parcourus dans le cas d'une courroie équipant un véhicule automobile, ou en heures de fonctionnement dans le cas d'une courroie équipant une autre sorte de machine.

FIG_1

FIG_5

## FIG_2

$\Theta_p$ (N,C) en °C

$C_3 = 10\%$
$C_2 = 50\%$
$C_1 = 100\%$

$C_3$

$C_2$

$C_1$

0

500  1000  1500  2000  2500  3000  3500  4000  4500  5000  5500

N (tr/mn)

## FIG_3

$\Theta_C$ en °C

0

500   1000   1500   2000   2500   3000   3500   4000   4500   5000   5500

N(tr/mn)

# FIG_4

$E_0$ — DEMARRAGE

$E_1$ — COURROIE NEUVE

OUI / NON

$E_2$ — $D_{dent} = D_{cable} = 0$
$K_0$

$E_3$ — $N, C, \theta, K_v$
$\Delta K = K_v - K_0$

$E_4$ — $\Delta T$

$E_5$ — $\delta D_{dent} = I_{dent}(N, C, \theta)$
$\delta D_{cable} = I_{cable}(\theta)$

$E_6$ — $D_{dent}(T+1) = D_{dent}(T) + \delta D_{dent} * \gamma_{dent}(D_{dent}(T)) * \Delta T$
$D_{cable}(T+1) = D_{cable}(T) + \delta D_{cable} * \gamma_{cable}(D_{cable}(T)) * \Delta T$

$E_7$ — $K_r = \min(K_{dent}, K_{cable})$

$E_8$ — Communication de $K_r$

$E_9$ — $K_r > 0$

OUI / NON

$E_{10}$ — ALERTE

$E_{11}$ — ARRÊT MOTEUR

OUI / NON

# FIG_6a

# FIG_6b

## FIG_7a

## FIG_7b

# FIG_8

$E_0$

DEMARRAGE ← $\theta_a$, $D_{dent}^{(a)}$, $D_{cable}^{(a)}$ — $E_{12}$

$E_1$

OUI ← COURROIE NEUVE → NON → $\theta_r$ — $E_{13}$

$$D_{dent}(1) = D_{dent}(a) + \Delta D_{dent}$$

$E_{14}$

$$D_{cable}(1) = D_{cable}(a) + \Delta D_{cable}$$

OUI

ARRET MOTEUR — $E_{11}$

$$N, C, \theta, K_{\upsilon}$$

$$\Delta K = K_{\upsilon} - K_0$$

$E_3$

$E_9$

$K_r > 0$ → OUI

NON

ALERTE — $E_{10}$

# FIG_9

$\theta_{r1} = -50°C$

$\theta_{r2} = 0°C$

$\theta_{r3} = 50°C$

$\theta_{r4} = 100°C$

# FIG_10

## FIG_11

## FIG_13

$C_1 = 20\%$
$C_2 = 40\%$
$C_3 = 60\%$
$C_4 = 80\%$
$C_5 = 100\%$

# FIG_12